# EUROPÄISCHE PATENTSCHRIFT

(11) **EP 3 934 033 B1**
(45) Veröffentlichungstag und Bekanntmachung des Hinweises auf die Patenterteilung: **14.02.2024**
(21) Anmeldenummer: 20183890.1
(22) Anmeldetag: 03.07.2020
(51) Int. Cl.: H01T 13/32, H01T 13/34, H01T 13/54

(54) **VORKAMMER-ZÜNDKERZE, VERFAHREN ZUR HERSTELLUNG EINER SOLCHEN VORKAMMER-ZÜNDKERZE SOWIE EIN EINE SOLCHE VORKAMMER-ZÜNDKERZE UMFASSENDER VERBRENNUNGSMOTOR**
PRE-CHAMBER SPARK PLUG, METHOD FOR THE PRODUCTION OF SUCH A PRE-CHAMBER SPARK PLUG AND COMBUSTION ENGINE COMPRISING SUCH A PRE-CHAMBER SPARK PLUG
BOUGIE D'ALLUMAGE DE CHAMBRE DE PRÉCOMBUSTION, PROCÉDÉ DE FABRICATION D'UNE TELLE BOUGIE D'ALLUMAGE DE CHAMBRE DE PRÉCOMBUSTION, AINSI QUE MOTEUR À COMBUSTION INTERNE COMPRENANT UNE TELLE BOUGIE D'ALLUMAGE DE CHAMBRE DE PRÉCOMBUSTION

(43) Veröffentlichungstag der Anmeldung: 05.01.2022
(73) Patentinhaber: Sparkx GmbH, 22359 Hamburg (DE)
(72) Erfinder: Schlag, Nils, 22359 Hamburg (DE); Niemeier, Stefan, 22359 Hamburg (DE); Schiliro, Michele, 22359 Hamburg (DE)
(74) Vertreter: Berkenbrink, Kai-Oliver

(56) Entgegenhaltungen:
- EP-A1- 3 068 001
- DE-A1-102010 022 564
- DE-A1-102018 105 181
- US-A- 3 515 925

## Beschreibung

Die Erfindung betrifft eine Vorkammer-Zündkerze zur Zündung eines Kraftstoff-Luft-Gemisches in einem Verbrennungsmotor, ein Verfahren zur Herstellung einer solchen Vorkammer-Zündkerze sowie einen Verbrennungsmotor, der wenigstens eine solche Vorkammer-Zündkerze umfasst.

Bei Vorkammer-Zündkerzen handelt es sich um eine spezielle Form von Zündkerzen zur Zündung eines Kraftstoff-Luft-Gemisches in Verbrennungsmotoren, die nach dem Prinzip der Magerverbrennung arbeiten. Bei Vorkammer-Zündkerzen ragen die Elektroden nicht unmittelbar in den Hauptbrennraum des Verbrennungsmotors. Vielmehr weisen Vorkammer-Zündkerzen eine Vorkammer auf, in die die Masseelektrode und die Mittelelektrode hineinragen. Zur Begrenzung der Vorkammer-Zündkerze weisen Vorkammer-Zündkerzen eine am Zündkerzenkörper befestigte, in den Hauptbrennraum ragende Vorkammerkappe auf. Die Vorkammerkappe weist Öffnungen in ihrer Wandung auf, durch welche ein Gasaustausch zwischen der Vorkammer und dem Hauptbrennraum möglich ist. Beim Betrieb einer Vorkammer-Zündkerze wird das Kraftstoff-Luft-Gemisch in der Vorkammer mittels Zündfunken zwischen der Masseelektrode und der Mittelelektrode gezündet. Die hierdurch in der Vorkammer erzeugte Flamme wird durch den bei der Zündung in der Vorkammer erzeugten Druck durch die Öffnungen in der Vorkammerkappe in die Hauptbrennkammer des Verbrennungsmotors geschleudert und entzündet hierdurch das in der Hauptbrennkammer befindliche magere Kraftstoff-Luft-Gemisch.

Vorkammer-Zündkerzen unterliegen insbesondere im Bereich der Masseelektrode einem Verschleiß. Daher kann es notwendig sein, die Masseelektrode aus dem Zündkerzenkörper entnehmen zu müssen, um diese bei einem Verschleiß ersetzen oder im Fall von Rußablagerungen reinigen zu können. Um Masseelektroden besonders einfach aus dem Zündkerzenkörper entnehmen zu, ist es bekannt, Masseelektroden lösbar im Zündkerzenkörper zu haltern, also die Masseelektrode insbesondere unter Form- oder Reibschluss, nicht jedoch durch Stoffschluss im Zündkerzenkörper zu haltern. Während des Betriebes der Vorkammer-Zündkerze muss jederzeit die Halterung der Masseelektrode im Zündkerzenkörper gewährleistet sein, um einen sicheren Sitz der Masseelektrode im Zündkerzenkörper und einen konstanten elektrischen Kontakt zwischen Masseelektrode und Zündkerzenkörper herzustellen. Dies gilt insbesondere auch bei einer lösbar im Zündkerzenkörper gehalterten Masseelektrode. Die stellt während des Betriebes der Vorkammer-Zündkerze aufgrund der mit den extremen Temperaturschwankungen während des Betriebes der Vorkammer-Zündkerze einhergehenden thermischen Verformungen der Vorkammer-Zündkerze eine technische Herausforderung dar. Mit den bisher bekannten Vorkammer-Zündkerzen, die eine im Zündkerzenkörper gehalterte Masseelektrode aufweisen, kann diese dauerhafte Halterung während des Betriebes der Vorkammer-Zündkerze nicht immer sichergestellt werden.

Eine Vorkammer-Zündkerze gemäß dem Oberbegriff des Anspruchs 1 ist aus DE 10 2018 105181 A1 bekannt
Der Erfindung liegt die Aufgabe zugrunde, eine Vorkammer-Zündkerze mit einer im Zündkerzenkörper gehalterten Masseelektrode zur Verfügung zu stellen, bei der auch während des Betriebes der Vorkammer-Zündkerze stets eine sichere Halterung der Masseelektrode im Zündkerzenkörper sichergestellt ist. Insbesondere soll die Halterung sicherer sein als bei den aus dem Stand der Technik bekannten Vorkammer-Zündkerzen. Insbesondere soll auch bei thermischen Verformungen der Vorkammer-Zündkerze stets eine sichere Halterung der Masseelektrode im Zündkerzenkörper gewährleistet sein.

Zur Lösung dieser Aufgabe wird erfindungsgemäß zur Verfügung gestellt eine Vorkammer-Zündkerze zur Zündung eines Kraftstoff-Luft-Gemisches in einem Verbrennungsmotor, insbesondere in einem Gasmotor, welche umfasst:
Einen Zündkerzenkörper;
eine Vorkammer;
eine im Zündkerzenkörper gehalterte und zumindest teilweise in die Vorkammer hineinragende Masseelektrode;
einen am Zündkerzenkörper befestigten Isolator;
eine aus dem Isolator herausführende und in die Vorkammer hineinragende Mittelelektrode; wobei
die Masseelektrode durch ein mehrteiliges, zwischen der Masseelektrode und dem Isolator verlaufendes Halteelement im Zündkerzenkörper gehaltert ist, wobei das Halteelement ein erstes Teil aus einer Formgedächtnislegierung umfasst, das gegen den Isolator anliegt.

Die Erfindung beruht auf der überraschenden erfindungsgemäßen Erkenntnis, dass die vorstehenden Aufgaben gelöst werden können, wenn die Masseelektrode durch ein mehrteiliges, zwischen der Masseelektrode und dem Isolator verlaufendes Halteelement lösbar im Zündkerzenkörper gehaltert ist. Die Erfindung beruht insbesondere auch auf der Erkenntnis, dass es die Mehrteiligkeit des Halteelementes ermöglicht, jedes Teil des Halteelementes mit spezifischen Eigenschaften zu versehen, die den jeweils spezifischen, unterschiedlichen Anforderungen des Halteelementes an unterschiedlichen Bereichen des Halteelementes in besonderer Weise gerecht werden.

Insoweit kann das Halteelement beispielsweise ein Teil umfassen, das am Isolator anliegt und plastisch verformbar ist, so dass es thermisch bedingte Verformungen des Zündkerzenkörpers kompensieren kann. Diese plastische Verformbarkeit kann zwar mit einer geringeren Hitzebeständigkeit dieses Teils einhergehen, was jedoch tolerierbar ist, da dieses Teil nicht den besonders hohen Temperaturen an der Masseelektrode ausgesetzt ist. Ferner kann das Halteelement beispielsweise ein weiteres Teil umfassen, das unmittelbar an der Masseelektrode anliegt und hoch hitzebeständig, dafür jedoch in geringerem Umfang plastisch verformbar ist.

Insofern können sich die jeweiligen Merkmale der mehreren Teile des Halteelementes synergistisch ergänzen, um die vorstehenden Aufgaben zu lösen.

Das Halteelement überbrückt den Raum beziehungsweise Spalt zwischen Masseelektrode und Isolator. Das Halteelement erstreckt sich also von der Masseelektrode bis zum Isolator beziehungsweise drückt sich am Isolator ab, um Druck auf die Masseelektrode auszuüben, um diese am Zündkerzenkörper zu haltern. Insoweit ist das Halteelement zwischen die Masseelektrode und den Isolator gedrängt.

Nach einer besonders bevorzugten Ausführungsform steht das Halteelement unter Vorspannung. Diese Vorspannung liegt insbesondere in Form einer vorgespannten Druckspannung vor. Dies ermöglicht es in besonderer Weise, auch während des Betriebes der Vorkammer-Zündkerze thermische Verformungen der Vorkammer-Zündkerze zu kompensieren und jederzeit eine feste Halterung der Masseelektrode im Zündkerzenkörper sicherzustellen. Um diese Vorspannung des Halteelementes zu erzeugen, kann vorgesehen sein, wenigstens ein Teil des Halteelementes zunächst durch Kühlen zu schrumpfen und anschließend im gekühlten Zustand in der Vorkammer-Zündkerze spielfrei anzuordnen. Bei der mit der anschließenden Aufwärmung einhergehenden Ausdehnung wird ein Vorspanndruck aufgebaut.

Nach einer bevorzugten Ausführungsform ist ein mehrteiliges Halteelement aus wenigstens einer Metalllegierung vorgesehen. Metalllegierungen haben insbesondere den Vorteil, dass sie den hohen Temperaturen beim Betrieb der Vorkammer-Zündkerze standhalten können und individuell an die jeweiligen Anforderungen an die Teile des Halteelementes anpassbar sind.

Das Halteelement umfasst ein erstes Teil, das gegen den Isolator anliegt. Dieses erste Teil kann sich insbesondere gegen den Isolator abstützen, um hierdurch den notwendigen Haltedruck zu erzeugen, durch den das Halteelement die Masseelektrode im Zündkerzenkörper haltert. Bevorzugt ist das erste Teil einstückig. Nach einer besonders bevorzugten Ausführungsform besteht das erste Teil aus einer plastisch verformbaren Metalllegierung. Aufgrund einer solch plastischen Verformbarkeit kann das erste Teil Verformungen der Vorkammer-Zündkerze, insbesondere thermisch bedingten Verformungen während des Betriebes der Vorkammer-Zündkerze, kompensieren und hierdurch eine dauerhafte, feste Verbindung des Halteelementes zwischen der Masseelektrode und dem Isolator und damit einen dauerhaften festen Sitz der Masseelektrode am Zündkerzenkörper sicherstellen. Besonders bevorzugt ist eine plastisch verformbare Metalllegierung vorgesehen, die sich nicht dauerhaft plastisch verformt, sondern das Vermögen hat, wieder die ursprüngliche Form einzunehmen.

Gemäß der Erfindung besteht das erste Teil aus einer Formgedächtnislegierung.

Besonders bevorzugt kann eine Formgedächtnislegierung aus einer Aluminium-Kupfer-Nickel-Legierung, insbesondere einer Aluminium-Mehrstoff-Bronze vorgesehen sein, besonders bevorzugt einer Aluminium-Mehrstoff-Bronze 2.0966, gemäß DIN EN 12163:2016-11. Eine solche Metalllegierung kann in Form einer Formgedächtnislegierung zur Verfügung gestellt werden.

Zweckmäßig ist das erste Teil ringförmig ausgebildet. Ein solch ringförmiges erstes Teil ist besonders einfach zu fertigen. Besonders bevorzugt ist ein ringförmiges erstes Teil rotationssymmetrisch zur Längsachse des Rings ausgebildet. Dies hat neben einer einfachen Fertigung auch den Vorteil, dass dieses besonders einfach stets korrekt einzubauen ist, da dieses nicht in einer bestimmten Drehposition einzubauen ist. Auch hat ein solch ringförmiges, insbesondere rotationssymmetrisch vorliegendes erstes Teil den Vorteil gleichmäßig über den Umfang verteilter Eigenschaften, wodurch beispielsweise Wärme sehr gleichmäßig aufgenommen und abgeleitet werden kann, wodurch das Auftreten von Spannungen, die zu einer Beschädigung des ersten Teils führen könnten, unterdrückt werden.

Zweckmäßig ist die Mittelelektrode durch ein ringförmiges erstes Teil geführt.

Bevorzugt weist das erste Teil eine dem Isolator zugewandte erste Kontaktfläche auf, mit der es bevorzugt gegen den Isolator anliegt. Bevorzugt ist die erste Kontaktfläche als Gleitfläche ausgebildet. Entlang einer solchen Gleitfläche kann das erste Teil an dem Isolator entlang gleiten, insbesondere bei einer thermischen Verformung der Vorkammer-Zündkerze, wodurch solch thermische Verformungen zumindest teilweise kompensierbar sind. Insbesondere ermöglicht dies auch bei einer thermischen Verformung der Vorkammer-Zündkerze stets eine sichere Anlage des Halteelementes am Isolator.

Bevorzugt weist der Isolator einen sich in Richtung auf die Masseelektrode konisch verjüngenden Abschnitt auf, gegen den das erste Teil des Halteelements anliegt. Insbesondere liegt das erste Teil gegen die sich konisch verjüngenden Flächen des sich konisch verjüngenden Abschnitts des Isolators an, womit die vorgenannten Gleitflächen zur Verfügung gestellt werden können. Isolatoren mit einem sich solch konisch in Richtung auf die Masseelektrode verjüngenden Abschnitt sind bekannt. Dieser Abschnitt wird auch als Isolatorfuß bezeichnet. Bevorzugt ist der sich konisch verjüngende Abschnitt des Isolators rotationssymmetrisch zur Längsachse der Vorkammer-Zündkerze ausgebildet.

Die Mantelfläche eines insbesondere ringförmig ausgebildeten ersten Teils des Halteelementes, also dessen außenumfangsseitige beziehungsweise radiale Umfangsfläche, weist bevorzugt eine kreiszylindrische Form auf. Bevorzugt liegt die Mantelfläche gegen den Zündkerzenkörper an, bevorzugt flächig. Eine solch flächige Anlage hat insbesondere den Vorteil eines guten Wärmeübergangs zwischen dem ersten Teil und dem Zündkerzenkörper.

Die Vorkammer-Zündkerze weist bevorzugt eine Längsachse auf. Komponenten der Vorkammer-Zündkerze können bevorzugt entlang der Längsachse angeordnet sein.

Bevorzugt verläuft die Längsachse eines als Ring ausgebildeten ersten Teils des Halteelementes konzentrisch zur Längsachse der Vorkammer-Zündkerze.

Die Längsachse des Isolators, insbesondere auch die Längsachse des vorbezeichnen konischen Abschnitts des Isolators, kann bevorzugt konzentrisch zur Längsachse der Vorkammer-Zündkerze verlaufen.

Bevorzugt umfasst das Halteelement ein zweites Teil, das gegen die Masseelektrode anliegt. Bevorzugt ist das zweite Teil einstückig. Bevorzugt besteht ein solch zweites Teil des Halteelementes aus einer hitzebeständigen Metalllegierung, insbesondere einer Metalllegierung die bei Temperaturen über 600° oder auch über 800°C formstabil ist. Bevorzugt besteht das zweite Teil aus einer Nickelbasis-Legierung, bevorzugt einer Nickelbasis-Legierung mit einem Anteil von wenigstens 20 Masse-% Nickel. Nach einer bevorzugten Ausführungsform besteht das zweite Teil aus einem Nickel-Chrom-Stahl, besonders bevorzugt aus einem aus austenitischem, rostfreien Nickel-Chrom-Stahl, jeweils bevorzugt mit einem Anteil von wenigstens 20 Masse-% Nickel.

Eine solche Metalllegierung erweist sich als besonders hitze- und formbeständig.

Zweckmäßig ist das zweite Teil ringförmig ausgebildet. Ein solch ringförmiges zweites Teil ist besonders einfach zu fertigen. Besonders bevorzugt ist ein ringförmiges zweites Teil rotationssymmetrisch zur Längsachse des Rings ausgebildet. Dies hat neben einer einfachen Fertigung auch den Vorteil, dass dieses besonders einfach stets korrekt einzubauen ist, da dieses nicht in einer bestimmten Drehposition einzubauen ist. Dies hat insbesondere den Vorteil, dass das zweite Teil stets korrekt an die Masseelektrode zur Anlage gebracht werden kann, da ein solch rotationssymmetrisches zweites Teil nicht in einer definierten Verdrehposition in Bezug auf die Masseelektrode gegen diese anliegen muss. Ferner kann ein solch rotationssymmetrisches zweites Teil besonders gleichmäßig gegen die Masseelektrode anliegen, wodurch Druck besonders gleichförmig gegen die Masseelektrode ausgeübt werden kann und ein besonders gleichförmiger Wärmeübergang zwischen Masseelektrode und zweitem Teil möglich ist.

Zweckmäßig ist die Mittelelektrode durch ein ringförmiges zweites Teil geführt.

Bevorzugt weist das zweite Teil eine der Masseelektrode zugewandte erste Kontaktfläche auf, mit der sie bevorzugt flächig gegen die Masseelektrode anliegt. Bevorzugt ist diese erste Kontaktfläche vollständig von der Masseelektrode abgedeckt. Hierdurch kann das Entstehen einer ungewünschten Funkenstrecke zwischen der Mittelelektrode und dem zweiten Teil unterdrückt werden.

Die Mantelfläche eines insbesondere ringförmig ausgebildeten zweiten Teils des Halteelementes, also dessen außenumfangsseitige beziehungsweise radiale Umfangsfläche, weist bevorzugt eine kreiszylindrische Form auf. Bevorzugt liegt die Mantelfläche gegen den Zündkerzenkörper an, bevorzugt flächig. Eine solch flächige Anlage hat insbesondere den Vorteil eines guten Wärmeübergangs zwischen dem zweiten Teil und dem Zündkerzenkörper.

Bevorzugt liegen das erste Teil und das zweite Teil des Halteelementes gegeneinander an. Weiter bevorzugt liegt das erste Teil nicht gegen die Masseelektrode und das zweite Teil nicht gegen den Isolator an. Nach einer bevorzugten Ausführungsform weist das erste Teil eine zweite Kontaktfläche und das zweite Teil eine zweite Kontaktfläche auf, wobei diese zweiten Kontaktflächen des ersten Teils und zweiten Teils gegeneinander anliegen. Besonders bevorzugt liegen das erste Teil und das zweite Teil flächig gegeneinander an. Dies hat den Vorteil eines besonders guten Wärmeübergangs zwischen erstem Teil und zweitem Teil.

Bevorzugt ist das Halteelement zweiteilig. Besonders bevorzugt besteht das Halteelement aus dem vorbezeichneten ersten und zweiten Teil.

Nach einer bevorzugten Ausführungsform ist vorgesehen, dass ein als Ring ausgebildetes zweites Teil benachbart zur zweiten Kontaktfläche mit einem Kragen, also einer umlaufenden Verdickung der Wandstärke des Rings ausgebildet ist. Dies hat den Vorteil, dass eine größere zweite Kontaktfläche zur Kontaktierung mit dem ersten Teil beziehungsweise der zweiten Kontaktfläche des ersten Teils zur Verfügung gestellt werden kann, so dass ein besonders guter Wärmeübergang zwischen erstem und zweitem Teil möglich ist. Gleichzeit hat dies den Vorteil, dass die Wandstärke des zweiten Teils im Bereich der Masseelektrode geringer sein kann, so dass die erste Kontaktfläche, mit der das zweite Teil gegen die Masseelektrode anliegt, vollständig von der Masseelektrode abgedeckt sein kann.

Bevorzugt verläuft die Längsachse eines als Ring ausgebildeten zweiten Teils konzentrisch zur Längsachse der Vorkammer-Zündkerze.

Die Erfinder der vorliegenden Erfindung haben erkannt, dass bei der erfindungsgemäßen Vorkammer-Zündkerze Wärme in besonders vorteilhafter Weise durch das Halteelement von der Masseelektrode ableitbar ist. Hierdurch kann eine thermische Beschädigung der Masseelektrode wirksam vermieden werden. Diese besonders vorteilhafte Wärmeableitung von Wärme von der Masseelektrode kann insbesondere erreicht werden, wenn das Halteelement aus wie vorstehend beschriebenen Metalllegierungen ausgebildet ist.

Bevorzugt kann vorgesehen sein, dass das erste Teil des Halteelementes eine Wärmeleitfähigkeit λ von wenigstens 40, insbesondere von wenigstens 45 W/m·K aufweist. Soweit das erste Teil aus Aluminium-Mehrstoff-Bronze ausgebildet ist, kann dieses eine Wärmeleitfähigkeit λ von 50 W/m·K aufweisen.

Bevorzugt weist das zweite Teil des Halteelementes eine Wärmeleitfähigkeit von wenigstens 10, besonders bevorzugt von wenigstens 15 W/m·K auf. Soweit das zweite Teil in Form einer Nickelbasis-Legierung zur Verfügung gestellt wird, weist dieses bevorzugt eine Wärmeleitfähigkeit von 19 W/m·K auf.

Die vorstehenden Wärmeleitfähigkeitswerte sind bestimmt gemäß ASTM E 1225:2013 bei 500°C.

Bevorzugt weist die erfindungsgemäße Vorkammer-Zündkerze eine ringförmige Masseelektrode auf. Bevorzugt verläuft die Längsachse einer ringförmigen Masseelektrode konzentrisch zur Längsachse der Vorkammer-Zündkerze. Eine solch ringförmige Masseelektrode kann besonders einfach und effektiv durch ein ringförmiges zweites Teil des Halteelementes gehaltert werden.

Bevorzugt ist eine einstückige Masseelektrode vorgesehen. Eine solch einstückige Masseelektrode kann besonders einfach und robust zur Verfügung gestellt werden und erweist sich als besonders korrosionsfest.

Nach einer besonders bevorzugten Ausführungsform ist eine kaltverformte Masseelektrode vorgesehen, insbesondere eine einstückige kaltverformte Masseelektrode. Erfindungsgemäß hat sich herausgestellt, dass sich eine solch kaltverformte Masseelektrode als besonders korrosionsfest erweist. Dies ist nach Auffassung der Erfinder darauf zurückzuführen, dass Gefügeveränderungen durch die Kaltverformung weitgehend vermieden werden können.

Die Masseelektrode kann aus den aus dem Stand der Technik bekannten Materialien, die für gattungsgemäße Masseelektroden bekannt sind, bestehen. Bevorzugt kann die Masseelektrode aus einer Metalllegierung, insbesondere einer elektrisch gut leitfähigen Metalllegierung bestehen. Nach einer bevorzugten Ausführungsform besteht die Masseelektrode aus einer Nickel-Chrom-Legierung, bevorzugt mit der folgenden Zusammensetzung: Nickel: 40-60 Massen-%; Chrom: 15-28 Massen-%; Eisen: Rest.

Nach eine bevorzugten Ausführungsform weist die Masseelektrode, insbesondere soweit sie aus einer wie vorstehend Metalllegierung besteht, eine Beschichtung auf, wodurch insbesondere die Korrosionsfestigkeit der Masseelektrode verbessert werden kann. Insbesondere kann eine Beschichtung aus wenigstens einer der folgenden Legierungen oder Metalle vorgesehen sein: Iridium-Platin, Rhodium, Rhenium oder einer Legierung aus wenigstens zweien dieser Metalle oder Legierungen.
also die Masseelektrode insbesondere unter Form- oder Reibschluss, nicht jedoch durch Stoffschluss im Zündkerzenkörper zu haltern.

Besonders bevorzugt ist die Masseelektrode lösbar im Zündkerzenkörper angeordnet, also insbesondere unter Form- oder Reibschluss, nicht jedoch durch Stoffschluss, also beispielsweise nicht durch eine Schweißverbindung, im Zündkerzenkörper angeordnet. Vielmehr ist die Masseelektrode derart im Zündkerzenkörper angeordnet, dass diese wieder lösbar, also insbesondere aus dem Zündkerzenkörper herausnehmbar ist. Dies hat insbesondere auch den Vorteil, dass die Masseelektrode einfach aus dem Zündkerzenkörper entnommen werden kann, beispielsweise um die Masseelektrode im Fall einer Korrosion zu reinigen oder durch eine neue Masseelektrode zu ersetzen. Bevorzugt ist die Masseelektrode in dem Zündkerzenkörper eingelegt und durch das Halteelement in der eingelegten Stellung im Zündkerzenkörper gehaltert, insbesondere unter Formschluss im Zündkerzenkörper gehaltert. Die Masseelektrode ragt zumindest teilweise in die Vorkammer herein, um dort mit der Mittelelektrode eine Funkenstrecke auszubilden und Funken zur Zündung eines Kraftstoff-Luft-Gemisches in der Vorkammer zu erzeugen.

Die Mittelelektrode ragt in die Vorkammer herein, um dort mit der Masseelektrode eine Funkenstrecke auszubilden und einen Funken zur Zündung des Kraftstoff-Luft-Gemisches in der Vorkammer zu erzeugen. Die Mittelelektrode kann gemäß dem Stand der Technik ausgebildet sein. Dabei kann die Mittelelektrode über ein im Isolator angeordnetes Widerstandselement, insbesondere ein Panat, und eine sich daran anschließende elektrische Versorgungsleitung mit elektrischer Spannung beaufschlagbar sein. Die Versorgungsleitung kann ganz oder vollständig innerhalb des Isolators verlaufen. Die Mittelelektrode ist durch den Isolator im Zündkerzenkörper gehaltert. Bevorzugt besteht der Isolator aus Keramik, insbesondere einer Keramik auf Basis Al₂O₃. Bevorzugt kann der Isolator stabförmig ausgebildet sein und bevorzugt entlang einer Längsachse verlaufen, wobei diese Längsachse konzentrisch zur Längsachse der Vorkammer-Zündkerze verlaufen kann. Der Isolator kann, wie aus dem Stand der Technik bekannt, an seinem der Mittelelektrode zugewandten Ende einen insbesondere konisch zulaufenden Fuß, an seinen gegenüberliegenden, dem elektrischen Anschluss zugewandten Ende, einen Isolatorkopf und einen dazwischen angeordneten Isolatorkörper umfassen. Die Mittelelektrode kann teilweise im Isolator angeordnet sein, über den Isolatorfuß hinausstehen und sich in die Vorkammer erstrecken.

Der Isolator kann bevorzugt über eine auf den Zündkerzenkörper aufschraubbare Muffe beziehungsweise Hülse, die zumindest teilweise über den Isolator gestülpt ist, am Zündkerzenkörper befestigt sein. Beispielsweise kann der Isolator über eine Klemmhülse, wie sie aus DE 10 2018 105 181 A1 bekannt ist, mit dem Zündkerzenkörper verbunden sein.

Der Zündkerzenkörper besteht bevorzugt aus einer Metalllegierung, insbesondere einer elektrisch und thermisch gut leitenden Metalllegierung, beispielsweise eine Chrom-Eisen-Legierung. Der Zündkerzenkörper ist derart ausgebildet, dass er mit dem Verbrennungsmotor verbindbar ist. Hierzu kann der Zündkerzenkörper gemäß dem Stand der Technik ausgebildet sein. Bevorzugt weist der Zündkerzenkörper ein Außengewinde auf, über das er in ein korrespondierendes Innengewinde mit einem Verbrennungsmotor verbindbar ist. Der Zündkerzenkörper kann im wesentlichen rotationssymmetrisch zu einer Längsachse verlaufen, wobei die Längsachse des Zündkerzenkörpers und der Vorkammer-Zündkerze konzentrisch zueinander verlaufen können.

Zur Ausbildung der Vorkammer kann die Vorkammer-Zündkerze eine Vorkammerkappe aufweisen, wie sie aus dem Stand der Technik für Vorkammer-Zündkerzen bekannt ist. Die Vorkammerkappe kann insbesondere am Zündkerzenkörper befestigt sein, insbesondere durch eine Schweißverbindung. Die Vorkammer kann insbesondere durch den durch die Vorkammerkappe und den Zündkerzenkörper begrenzten Raum definiert sein. Die Vorkammerkappe kann, wie aus dem Stand der Technik bekannt, eine Wand mit Durchgangsöffnungen aufweisen, durch die das in der Vorkammer entzündende Kraft-Luftstoff-Gemisch in den Hauptbrennraum des Verbrennungsmotors gelangen kann. Die Vorkammerkappe kann bevorzugt rotationssymmetrisch zu einer Längsachse, die bevorzugt konzentrisch zur Längsachse der Vorkammer-Zündkerze verlaufen kann, verlaufen. Bevorzugt besteht die Vorkammerkappe aus einer Metalllegierung, bevorzugt einer nickelbasierten Legierung.

Gegenstand der Erfindung ist auch ein Verfahren zur Herstellung der erfindungsgemäßen Vorkammer-Zündkerze, umfassend die folgenden Schritte:
Kühlen wenigstens eines der Teile des Halteelementes in einen gekühlten Zustand;
Zusammenbau der Vorkammerzündkerze, während sich das wenigstens eine Teil des Halteelementes in dem gekühlten Zustand befindet.

Bevorzugt kann wenigstens das vorbezeichnete, erste Teil des Halteelementes zunächst gekühlt und dadurch in einen gekühlten Zustand gebracht werden, beispielsweise durch Kühlen in flüssigem Stickstoff. Hierdurch schrumpft das Teil des Halteelementes. Anschließend wird das Teil des Halteelementes in der Vorkammer-Zündkerze verbaut, so dass diese erfindungsgemäß konfektioniert ist. Insbesondere wird das gekühlte Teil des Halteelementes ohne Spiel verbaut. Nach dem Aufwärmen und dem damit eingehenden Ausdehnen des gekühlten Teils übt dieses einen Druck aus, so dass das Halteelement insgesamt unter Vorspannung steht.

Gegenstand der Erfindung ist auch ein Verbrennungsmotor, der wenigstens eine erfindungsgemäße Vorkammer-Zündkerze umfasst.

Im Übrigen kann der Verbrennungsmotor gemäß dem Stand der Technik ausgebildet sein.

Weitere Merkmale der Erfindung ergeben sich aus den Figuren sowie der zugehörigen, nachfolgenden Figurenbeschreibung.

Sämtliche Merkmale der Erfindung können, einzeln oder in Kombination, beliebig miteinander kombiniert sein.

Ein Ausführungsbeispiel der Erfindung wird nachfolgend näher erläutert.

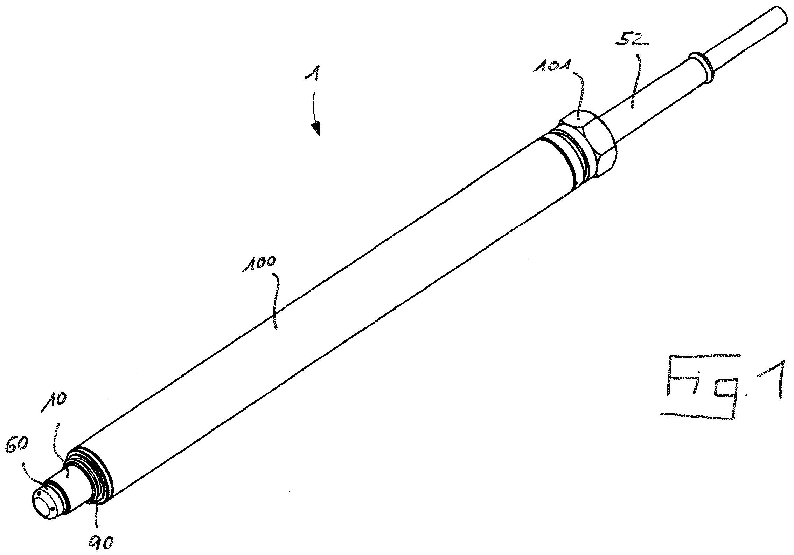

Dabei zeigt
- Figur 1: eine perspektivische Seitenansicht eines Ausführungsbeispiels einer erfindungsgemäßen Vorkammer-Zündkerze;

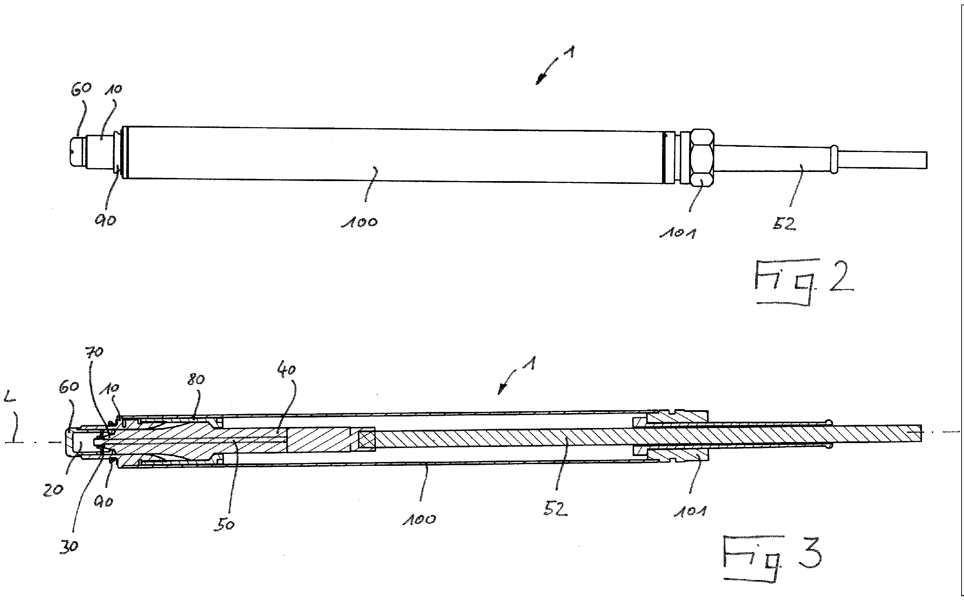

- Figur 2: eine Seitenansicht auf die Vorkammer-Zündkerze nach Figur 1;
- Figur 3: eine Schnittansicht der Vorkammer-Zündkerze nach Figur 1;
- Figur 4: eine Explosionsdarstellung der Vorkammer-Zündkerze nach Figur 1;

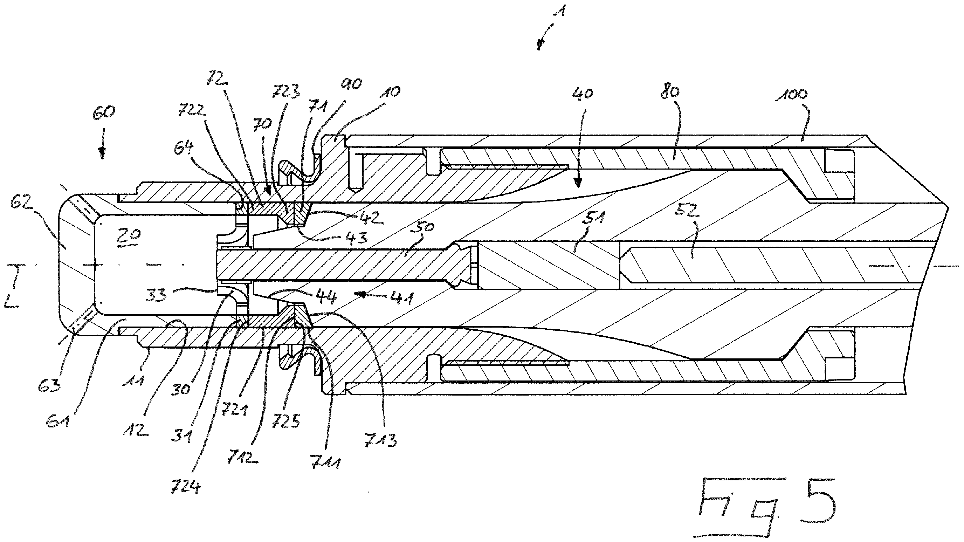

- Figur 5: eine Schnittansicht der Vorkammer-Zündkerze nach Figur 1 in deren brennraumseitigem Abschnitt;

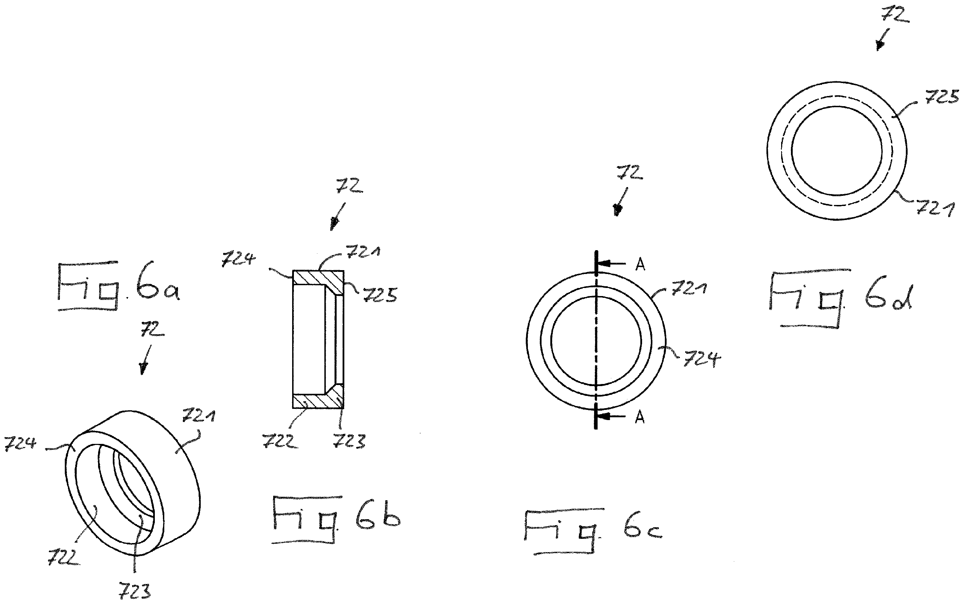

- Figuren 6a-d: Darstellungen des ersten Teils des Halteelementes der Vorkammer-Zündkerze nach Figur 1;
- Figuren 7a-d: Darstellungen des zweiten Teils des Halteelementes der Vorkammer-Zündkerze nach Figur 1; und
- Figuren 8a-b: Darstellungen der Massenelektrode der Vorkammer-Zündkerze nach Figur 1.

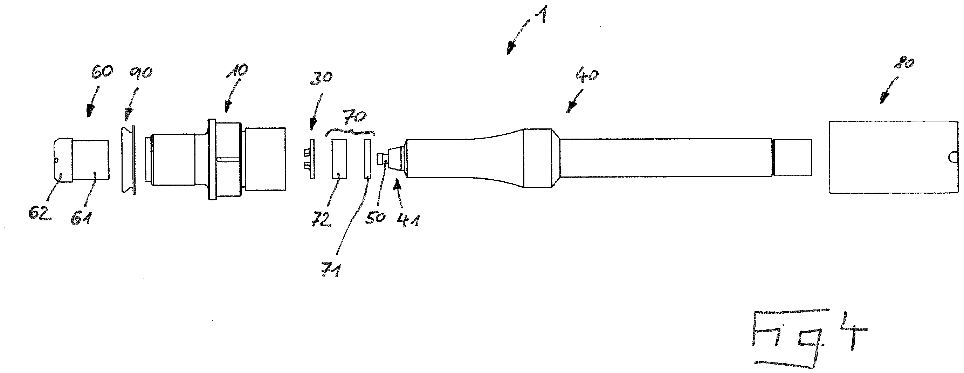

In ihrer Gesamtheit ist die in den Figuren dargestellte Vorkammer-Zündkerze mit dem Bezugszeichen 1 gekennzeichnet. Die Vorkammer-Zündkerze 1 umfasst einen Zündkerzenkörper 10, eine Vorkammer 20, eine Masseelektrode 30, einen Isolator 40, eine Mittelelektrode 50 sowie ein Halteelement 70. Ferner umfasst die Vorkammer-Zündkerze 1 einen Mantel 100, der die vorbezeichneten Komponenten der Vorkammer-Zündkerze 1 weitgehend umfasst und nur am brennraumseitigen Ende der Vorkammer-Zündkerze 1 die Vorkammerkappe 60 und einen brennraumseitigen Abschnitt des Zündkerzenkörpers 10 freilässt. Der besseren Übersichtlichkeit halber ist der Mantel 100 in Figur 4 nicht dargestellt. Wie nachfolgend näher ausgeführt, sind die Komponenten der Vorkammer-Zündkerze 1 entlang einer Längsachse L der Vorkammer-Zündkerze 1 angeordnet. Dabei verlaufen die Komponenten der Vorkammer-Zündkerze 1 im Wesentlichen rotationssymmetrisch zur Längsachse L.

Die in den Figuren dargestellte Vorkammer-Zündkerze 1 dient zur Zündung eines Kraftstoff-Luft-Gemisches in einem Gasmotor.

Zur Befestigung der Vorkammer-Zündkerze 1 in einem Gasmotor weist der Zündkerzenkörper 10 an seinem Außenumfang im Bereich 11 ein in den Figuren nicht näher dargestelltes Außengewinde auf, über das er in ein in den Figuren nicht dargestelltes, korrespondierendes Innengewinde eines Gasmotors derart einschraubbar ist, dass die Vorkammer 20 in den Hauptbrennraum des Gasmotors ragt. Über einen Sicherungsring 90 ist der Sitz des Zündkerzenkörpers 10 im Gasmotor zusätzlich gesichert. Der Zündkerzenkörper 10 weist die aus dem Stand der Technik bekannte, sockelartige Form auf und verläuft im Wesentlichen rotationssymmetrisch zur Längsachse L. Der Zündkerzenkörper 10 besteht aus einem elektrisch gut leitenden, beständigen und festen Nickel-Chrom-Molybdän legierten Stahl (Werkstoffnummer 1.6510; Güte 39NiCrMo3 gemäß DIN EN 10083-3).

Zur Ausbildung der Vorkammer 20 ist am brennraumseitigen Ende der Vorkammer-Zündkerze 1 eine Vorkammerkappe 60 durch eine Schweißverbindung mit dem Zündkerzenkörper 10 verbunden. Die Vorkammerkappe 60 weist die aus dem Stand der Technik bekannte Form einer Kappe beziehungsweise eines Topfes auf, der rotationssymmetrisch zur Längsachse L verläuft. Die kreiszylindrische Seitenwandung 61 der Vorkammerkappe 60 liegt mit ihrer Außenfläche passgenau an einer korrespondierenden Innenfläche 12 einer brennraumseitigen Aufnahme des Zündkerzenkörpers 10 an. Mit ihrem Boden 62 steht die Vorkammerkappe 60 über diese Aufnahme hervor und ragt in den Hauptbrennraum des Gasmotors herein. Durch den Boden 62 verlaufen Öffnungen 63 für einen Gasdurchtritt. Die Vorkammerkappe 60 besteht aus einer nickelbasierten Metalllegierung mit einem Anteil von 98 Masse-% Nickel.

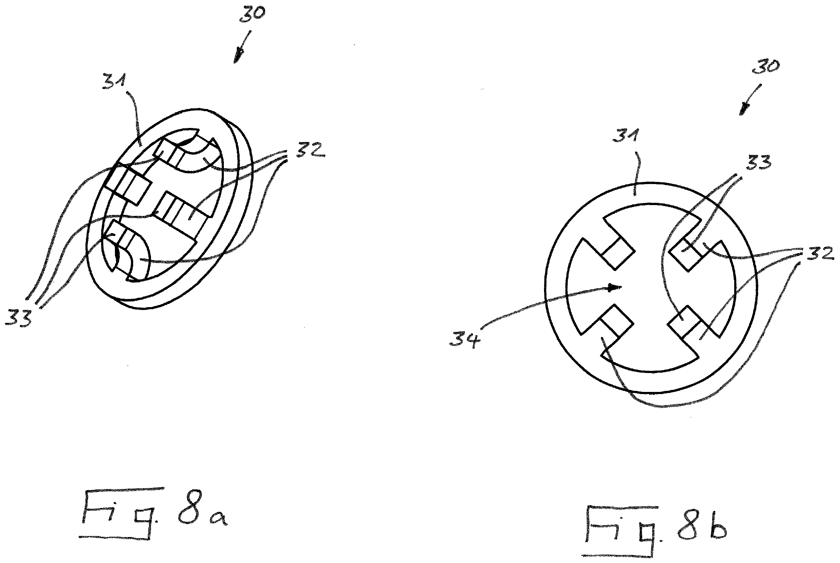

Durch die im Zündkerzenkörper 10 verlaufende Stirnfläche 64 der Seitenwandung 61 der Vorkammerkappe 60 ist ein unmittelbar zur Innenwandung 12 des Zündkerzenkörpers 10 verlaufender, ringförmiger Anschlag beziehungsweise ringförmiger Sitz ausgebildet, auf dem die Masseelektrode 30 aufliegt. Den die Masseelektrode 30 im Detail darstellenden Figuren 8a, 8b ist entnehmbar, dass die Masseelektrode 30 im Wesentlichen ringförmig ausgebildet ist. Die Masseelektrode 30 ist dabei als einstückiges, kaltverformtes Metallteil einer Nickel-Chrom basierten Metalllegierung folgender Zusammensetzung gebildet: Nickel: 50 Masse-%; Chrom: 20 Masse-%; Magnesium: 1,5 Masse-%; Eisen: Rest. Die Masseelektrode 30 umfasst einen ringförmigen Abschnitt 31, vom dem aus am Innenradius des ringförmigen Abschnitts 31 vier jeweils 90° zueinander versetzte, jeweils gleichförmig ausgebildete Abschnitte 32 zum Mittelpunkt des kreisförmigen Abschnitts 31 radial vorspringen und einen in Axialrichtung umgebogenen, freien Endabschnitt 33 aufweisen. Die Masseelektrode 30 liegt mit ihrem ringförmigen Abschnitt 31 auf der Stirnfläche 64 der Vorkammerkappe 60 auf, wobei die vier Abschnitte 32 in die Vorkammer 20 hineinragen und mit ihren Endabschnitten 33 in Richtung auf den Hauptbrennraum beziehungsweise den Boden 62 der Vorkammerkappe 60 zu verlaufen. Die Endabschnitte 33 sind um einen in der Mitte der Masseelektrode 30 freibleibenden Freiraum 34 herum angeordnet. Die Masseelektrode 30 liegt insoweit lösbar auf der Stirnfläche 64 auf. Die Längsachse der Masseelektrode 30 verläuft konzentrisch zur Längsachse L der Vorkammer-Zündkerze 1.

Die Masseelektrode 30 ist durch das zweiteilige, zwischen der Masseelektrode 30 und dem Isolator 40 verlaufende Halteelement 70 lösbar im Zündkerzenkörper 10 gehaltert. Das Halteelement 70 umfasst ein jeweils einstückiges erstes ringförmiges Teil 71 und ein zweites ringförmiges Teil 72. Das ringförmige erste Teil 71 und das ringförmige zweite Teil 72 verlaufen jeweils rotationssymmetrisch zur Längsachse L der Vorkammer-Zündkerze 1.

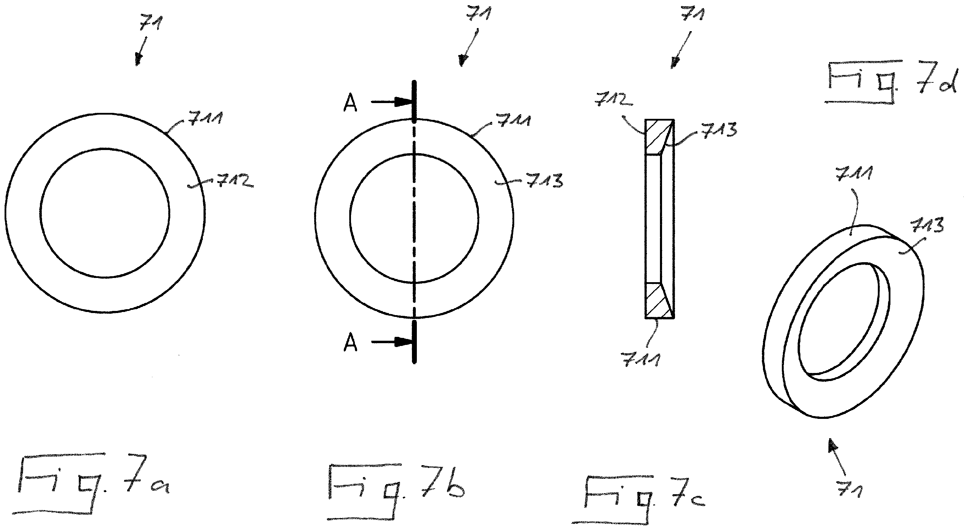

Das ringförmige zweite Teil 72, das in den Figuren 7a-7d im Detail dargestellt ist, weist eine kreiszylindrische Mantelfläche 721 auf, die flächig gegen die korrespondierende Innenwandung 12 des Zündkerzenkörpers 10 anliegt. Das zweite Teil 72 umfasst einen der Masseelektrode 30 zugewandten ersten Abschnitt 722 und einen dem ersten Teil 71 zugewandten zweiten Abschnitt 723 auf. An der Stirnfläche 724 des ersten Abschnitts 722 ist eine erste Kontaktfläche des zweiten Teils 72 ausgebildet, mit der das zweite Teil 72 flächig gegen den ringförmigen Abschnitt 31 der Masseelektrode 30 anliegt. Diese Stirnfläche 724 ist vollständig vom ringförmigen Abschnitt 31 der Masseelektrode 30 abgedeckt. Der sich an den ersten Abschnitt 722 des zweiten Teils 72 anschließende, dem ersten Teil 71 zugewandte zweite Abschnitt 723 ist als ringförmiger Kragen, also ein Abschnitt mit einer größeren Wandstärke des zweiten Teils 72 ausgebildet. Hierdurch weist der zweite Abschnitt 723 eine dem ersten Teil 71 zugewandte, vergrößerte ringförmige Stirnfläche 725 auf. Diese Stirnfläche 725 dient als zweite Kontaktfläche, mit der das zweite Teil 72 gegen das erste Teil 71 anliegt. Das zweite Teil 72 des Halteelementes 70 besteht aus einer hoch hitze- und formbeständigen, gut wärmeleitenden Nickelbasislegierung mit einer Wärmeleitfähigkeit λ von 19 W/m·K (gemäß ASTM E 1225:2013 bei 500°C), Werkstoffnummer 1.4841 (gemäß DIN EN 12163:2016-11).

Das erste Teil 71 des Halteelementes 70 weist eine kreiszylindrische Mantelfläche 711 auf, die flächig gegen die korrespondierende Innenwandung 12 des Zündkerzenkörpers 10 anliegt. Die dem zweiten Teil 72 zugewandte Stirnfläche 712 des ersten Teils 71 ist als zweite Kontaktfläche ausgebildet, mit welcher das erste Teil 71 flächig gegen die Stirnfläche 725 des zweiten Teils 72 anliegt, wobei sich die jeweiligen Stirnflächen 725, 712 gegenseitig vollständig abdecken. Die der Stirnfläche 712 gegenüberliegende, dem Isolator 40 zugewandte Stirnfläche 713 des ersten Teils 71 ist als konisch zum Ringinneren abfallende Fläche ausgebildet. Diese Stirnfläche 713 stellt eine erste Kontaktfläche des ersten Teils 71 dar, mit der das erste Teil 71 gegen den Isolator 40 anliegt. Dabei liegt der erste Teil 71 mit dieser Stirnfläche 713 flächig gegen eine korrespondierende Fläche eines sich konisch in Richtung auf die Masseelektrode 30 verjüngenden Abschnitts 41 des Isolators 40 an. Der erste Teil 71 besteht aus einer Formgedächtnislegierung in Form einer Aluminium-Mehrstoff-Bronze, Werkstoffnummer 2.0966 (gemäß DIN EN 12163:2016-11) folgender Zusammensetzung: Aluminium: 14 Masse-%; Nickel: 15 Masse-%; Kupfer: 13 Masse-%; Eisen: Rest. Die Wärmeleitfähigkeit λ des ersten Teils 71 beträgt 50 W/m·K (gemäß ASTM E 1225:2013 bei 500°C).

Der sich konisch verjüngende Abschnitt 41 des Isolators stellt den Isolatorfuß des Isolators 40 dar, der rotationssymmetrisch zur Längsachse L der Vorkammer-Zündkerze 1 verläuft. Dabei umfasst der Isolatorfuß 41 einen ersten Abschnitt 42, dessen Oberfläche in einem Winkel von etwa 20° zur Normalen der Längsachse L verläuft und an den das erste Teil 71 mit seiner Stirnfläche 713 anliegt. An diesen Abschnitt 42 schließt sich über eine Stufe 43, mit einer parallel zur Längsachse L verlaufenden Oberfläche, ein zweiter konischer Abschnitt 44 an, dessen Oberfläche in einem Winkel von etwa 20° zur Längsachse L verläuft.

Der Isolator 40 besteht aus einer Keramik auf Basis Al₂O₃ und verläuft rotationssymmetrisch zur Längsachse L der Vorkammer-Zündkerze 1. Entlang der Längsachse des Isolators 40 verläuft die stabförmige Mittelelektrode 50, die an dem der Masseelektrode 30 zugewandten Ende des Isolators 40 aus dem Isolatorfuß 41 herausgeführt ist und in die Vorkammer 20 hineinragt. Dabei ragt die Mittelelektrode 50 durch den Freiraum 34 der Mittelelektrode 30 hindurch und ein Stück weiter in die Vorkammer 20 hinein. Das der Mittelelektrode 30 zugewandte Ende des Isolatorfußes 41 endet unmittelbar vor der Masseelektrode 30, so dass die Mittelektrode 50 mittig durch das erste Teil 71 und das zweite Teil 72 des Halteelementes 70 hindurchgeführt, in diesem Bereich jedoch noch durch den Isolatorfuß 41 isoliert ist. Die Mittelelektrode 50 ist über ein im Isolator 40 angeordnetes Panat 51 und eine sich daran anschließende elektrische Versorgungsleitung 52 mit elektrischer Spannung beaufschlagbar. Der Isolator 40 ist mittels einer über den Isolator 40 gestülpten Hülse 80, die über ein Innengewinde der Hülse 80 auf ein korrespondierendes Außengewinde des Zündkerzenkörpers 10 aufgeschraubt ist, am Zündkerzenkörper 10 befestigt. Die Hülse 80 ist dabei so weit auf den Zündkerzenkörper 10 aufgeschraubt, bis der Isolator 40 gegen das Halteelement 70 anliegt beziehungsweise das erste Teil 71 und das zweite Teil 72 des Halteelementes 70 spielfrei zwischen Masseelektrode 30 und Isolator 40 anliegen und hierdurch den Spalt zwischen Massenelektrode 30 und Isolator 40 überbrücken. Hierdurch stützt sich das erste Teil 71 gegen den Isolator 40 ab, um hierdurch den notwendigen Haltedruck zu erzeugen, der über das zweite Teil 72 auf die Masseelektrode 30 übertragen wird und die Masseelektrode 30 hierdurch fest gegen die Stirnfläche 64 der Vorkammerkappe 60 drückt, so dass die Masseelektrode 30 sicher im Zündkerzenkörper 10 gehaltert ist.

Im Ausführungsbeispiel steht das Halteelement 70 unter Vorspannung. Hierzu wurde das erste Teil 71 des Halteelementes 70 zunächst durch Kühlen in flüssigem Stickstoff geschrumpft. Anschließend wurde das erste Teil 71 in der Vorkammer-Zündkerze 1 verbaut und der Isolator mittels der Hülse 80 fest gegen das Halteelement 70 geführt. Beim anschließenden Aufwärmen und dem damit einhergehenden Ausdehnen des ersten Teils 71 übt dieses einen Druck gegen den Isolator 40 und das zweite Teil 72 aus, so dass das Halteelement 70 insgesamt unter Vorspannung steht.

Der die Komponenten der Vorkammer-Zündkerze 1 weitgehend umfassende Mantel 100 besteht aus Stahl und ist über ein Innengewinde auf ein korrespondierendes Außengewinde des Zündkerzenkörpers 10 auf diesen aufgeschraubt. Am brennraumseitigen Ende der Vorkammer-Zündkerze 1 stehen die Vorkammerkappe 60 und ein brennraumseitiger Abschnitt des Zündkerzenkörpers 10 über den Mantel 100 hervor. Am gegenüberliegenden Ende des Mantels 100 steht die elektrische Versorgungsleitung 52 über den Mantel 100 hervor und ist über ein auf dieses Ende des Mantels 100 aufgeschraubtes Zentrierstück 101 zentrisch zum Mantel 100 gehaltert.

Beim Betrieb der Vorkammer-Zündkerze 1 wird mittels Beaufschlagung der Mittelelektrode 50 mit elektrischem Strom ein Zündfunkte zwischen dem freien Ende 50 der Mittelelektrode und der Masseelektrode 30 erzeugt, die ein über die Öffnungen 63 in die Vorkammer 20 gelangtes Kraftstoff-Luft-Gemisch in der Vorkammer 20 entzündet. Die hierdurch in der Vorkammer 20 erzeugte Flamme gelangt durch den bei dieser Zündung in der Vorkammer 20 erzeugten Druck durch die Öffnungen 63 in die Hauptbrennkammer des Gasmotors und entzündet dort das Kraftstoff-Luft-Gemisch. Die mit der Anwendung der Vorkammer-Zündkerze 1 einhergehenden hohen Temperaturen und thermischen Verformungen der Vorkammer-Zündkerze kann das erfindungsgemäße Halteelement 70 kompensieren und jederzeit einen anhaltenden Haltedruck gegen die Masseelektrode 30 zur Verfügung stellen, der einen dauerhaften festen Sitz der Masseelektrode 30 am Zündkerzenkörper 10 sicherstellt. Hierzu tragen zum einen die gute Wärmeleitfähigkeit des ersten Teils 71 und zweiten Teils 72 des Halteelementes 70 bei, durch die Wärme von der Masseelektrode 30 gut an dem Zündkerzenkörper 10 abgeleitet werden kann. Ferner trägt hierzu bei die hohe thermische Belastbarkeit des zweiten Teils 72, welches aus einer hoch hitzebeständigen Metalllegierung besteht. Ferner trägt hierzu bei die plastisch verformbare Formgedächtnislegierung des ersten Teils 71 des Halteelementes 70, welches die thermischen Verformungen der Vorkammer-Zündkerze 1 kompensieren kann und dennoch das Vermögen hat, wieder die ursprüngliche Form einzunehmen. Gleichzeitig wird dies durch die schräg zur Längsachse L verlaufende Kontaktfläche zwischen erstem Teil 71 und Isolatorfuß 41 ermöglicht, welche als Gleitfläche wirkt, entlang derer das erste Teil 71 und der Isolator 40 bei einer thermischen Verformung der Vorkammer-Zündkerze 1 gleiten können.

## Patentansprüche

1. Vorkammer-Zündkerze zur Zündung eines Kraftstoff-Luft-Gemisches in einem Verbrennungsmotor, insbesondere in einem Gasmotor, umfassend
1.1 einen Zündkerzenkörper (10),
1.2 eine Vorkammer (20),
1.3 eine im Zündkerzenkörper (10) gehalterte und zumindest teilweise in die Vorkammer (20) hineinragende Masseelektrode (30),
1.4 einen am Zündkerzenkörper (10) befestigten Isolator (40),
1.5 eine aus dem Isolator (40) herausführende und in die Vorkammer (20) hineinragende Mittelelektrode (50),
**dadurch gekennzeichnet, dass**
1.6 die Masseelektrode (30) durch ein mehrteiliges, zwischen der Masseelektrode (30) und dem Isolator (40) verlaufendes Halteelement (70) im Zündkerzenkörper (10) gehaltert ist, wobei das Halteelement (70) ein erstes Teil (71) aus einer Formgedächtnislegierung umfasst, das gegen den Isolator (40) anliegt.

2. Vorkammer-Zündkerze nach Anspruch 1, wobei das Halteelement (70) unter Vorspannung steht.

3. Vorkammer-Zündkerze nach einem der vorhergehenden Ansprüche mit einem Halteelement (70) aus wenigstens einer Metalllegierung.

4. Vorkammer-Zündkerze nach einem der vorhergehenden Ansprüche mit einem ringförmigen ersten Teil (71).

5. Vorkammer-Zündkerze nach einem der vorhergehenden Ansprüche, wobei das Halteelement (70) ein zweites Teil (72) umfasst, das gegen die Masseelektrode (30) anliegt.

6. Vorkammer-Zündkerze nach Anspruch 5 umfassend ein zweites Teil (72) aus einer hitzebeständigen Metalllegierung.

7. Vorkammer-Zündkerze nach einem der Ansprüche 5 oder 6 mit einem ringförmigen zweiten Teil (72).

8. Vorkammer-Zündkerze nach einem der Ansprüche 5 bis 7, wobei das erste Teil (71) und das zweite Teil (72) gegeneinander anliegen.

9. Vorkammer-Zündkerze nach einem der vorhergehenden Ansprüche mit einer ringförmigen Masseelektrode (30).

10. Vorkammer-Zündkerze nach einem der vorhergehenden Ansprüche mit einer einstückigen Masseelektrode (30).

11. Vorkammer-Zündkerze nach einem der vorhergehenden Ansprüche mit einer lösbar im Zündkerzenkörper (10) gehalterten Masseelektrode (30).

12. Verfahren zur Herstellung der Vorkammer-Zündkerze nach einem der vorhergehenden Ansprüche, umfassend die folgenden Schritte:
A. Kühlen wenigstens eines der Teile des Halteelementes in einen gekühlten Zustand;
B. Zusammenbau der Vorkammerzündkerze, während sich das wenigstens eine Teil des Halteelementes in dem gekühlten Zustand befindet.

13. Verbrennungsmotor, der wenigstens eine Vorkammer-Zündkerze nach einem derAnsprüche 1 bis 11 umfasst.

## Claims

1. Prechamber spark plug for igniting a fuel-air mixture in an internal combustion engine, in particular in a gas engine, comprising
1.1a spark plug body (10),
1.2 a prechamber (20),
1.3 an earth electrode (30) retained in the spark plug body (10) and projecting at least partially into the prechamber (20),
1.4 an insulator (40) attached to the spark plug body (10),
1.5 a center electrode (50) leading out of the insulator (40) and projecting into the prechamber (20),
**characterized in that**
1.6 the earth electrode (30) is retained in the spark plug body (10) by a multi-part retaining element (70) extending between the earth electrode (30) and the insulator (40), the retaining element (70) comprising a first part (71) made of a shape memory alloy which abuts against the insulator (40).

2. Prechamber spark plug according to claim 1, wherein the retaining element (70) is under preload.

3. Prechamber spark plug according to one of the preceding claims with a retaining element (70) made of at least one metal alloy.

4. Prechamber spark plug according to any one of the preceding claims, comprising an annular first part (71).

5. Prechamber spark plug according to any one of the preceding claims, wherein the retaining element (70) comprises a second part (72) which abuts against the earth electrode (30).

6. Prechamber spark plug according to claim 5 comprising a second part (72) made of a heat-resistant metal alloy.

7. Prechamber spark plug according to any one of claims 5 or 6, comprising an annular second part (72).

8. Prechamber spark plug according to any one of claims 5 to 7, wherein the first part (71) and the second part (72) abut against each other.

9. Prechamber spark plug according to one of the preceding claims with an annular earth electrode (30).

10. Prechamber spark plug according to any one of the preceding claims, comprising a one-piece earth electrode (30).

11. Prechamber spark plug according to one of the preceding claims with an earth electrode (30) detachably retained in the spark plug body (10).

12. A method of manufacturing the prechamber spark plug according to any one of the preceding claims, comprising the following steps:
A. Cooling at least one of the parts of the retaining element to a cooled state;
B. Assembly of the prechamber spark plug while the at least one part of the retaining element is in the cooled state.

13. An internal combustion engine comprising at least one prechamber spark plug according to any one of claims 1 to 11.

## Revendications

1. Bougie d'allumage de chambre de précombustion pour l'allumage d'un mélange carburant-air dans un moteur à combustion interne, en particulier un moteur à gaz, comprenant
1.1 un corps de bougie d'allumage (10),
1.2 une chambre de précombustion (20),
1.3 une électrode de masse (30) maintenue dans le corps de bougie d'allumage (10) et faisant saillie au moins en partie dans la chambre de précombustion (20),
1.4 un isolateur (40) fixé au corps de bougie d'allumage (10),
1.5 une électrode centrale (50) ressortant de l'isolateur (40) et faisant saillie dans la chambre de précombustion (20),
**caractérisée en ce que**
1.6 l'électrode de masse (30) est maintenue dans le corps de bougie d'allumage (10) par un élément de retenue (70) en plusieurs parties) passant entre l'électrode de masse (30) et l'isolateur (40), sachant que l'élément de retenue (70) comprend une première partie (71) composée d'un alliage à mémoire de forme, qui vient s'appliquer contre l'isolateur (40).

2. Bougie d'allumage de chambre de précombustion selon la revendication 1, sachant que l'élément de retenue (70) se trouve sous précontrainte.

3. Bougie d'allumage de chambre de précombustion selon l'une quelconque des revendications précédentes avec un élément de retenue (70) composé d'au moins un alliage métallique.

4. Bougie d'allumage de chambre de précombustion selon l'une quelconque des revendications précédentes avec une première partie de forme annulaire (71).

5. Bougie d'allumage de chambre de précombustion selon l'une quelconque des revendications précédentes, sachant que l'élément de retenue (70) comprend une deuxième partie (72), qui vient s'appliquer contre l'électrode de masse (30).

6. Bougie d'allumage de chambre de précombustion selon la revendication 5 comprenant une deuxième partie (72) dans un alliage métallique thermorésistant.

7. Bougie d'allumage de chambre de précombustion selon l'une quelconque des revendications 5 ou 6 avec une deuxième partie de forme annulaire (72).

8. Bougie d'allumage de chambre de précombustion selon l'une quelconque des revendications 5 à 7, sachant que la première partie (71) et la deuxième partie (72) viennent s'appliquer l'une contre l'autre.

9. Bougie d'allumage de chambre de précombustion selon l'une quelconque des revendications précédentes avec une électrode de masse de forme annulaire (30).

10. Bougie d'allumage de chambre de précombustion selon l'une quelconque des revendications précédentes avec une électrode de masse d'une pièce (30).

11. Bougie d'allumage de chambre de précombustion selon l'une quelconque des revendications précédentes avec une électrode de masse (30) maintenue de façon amovible dans le corps de bougie d'allumage (10).

12. Procédé de fabrication de la bougie d'allumage de chambre de précombustion selon l'une quelconque des revendications précédentes comprenant les étapes suivantes :
A. refroidissement d'au moins une des parties de l'élément de retenue à un état refroidi,
B. assemblage de la bougie d'allumage de chambre de précombustion pendant qu'au moins une partie de l'élément de retenue se trouve à l'état refroidi.

13. Moteur à combustion interne qui comprend au moins une bougie d'allumage de chambre de précombustion selon l'une quelconque des revendications 1 à 11.
